(19) **Europäisches Patentamt**
**European Patent Office**
**Office européen des brevets**

(11) **EP 3 723 183 A1**

(12) **EUROPEAN PATENT APPLICATION**
published in accordance with Art. 153(4) EPC

(43) Date of publication:
**14.10.2020 Bulletin 2020/42**

(21) Application number: **19815806.5**

(22) Date of filing: **21.05.2019**

(51) Int Cl.:
*H01M 10/12* (2006.01)    *H01M 4/14* (2006.01)

(86) International application number:
**PCT/JP2019/020158**

(87) International publication number:
**WO 2019/235216 (12.12.2019 Gazette 2019/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.06.2018 PCT/JP2018/021745**
**06.06.2018 PCT/JP2018/021750**

(71) Applicant: **Hitachi Chemical Company, Ltd.**
**Chiyoda-ku,**
**Tokyo 100-6606 (JP)**

(72) Inventors:
- **TOZUKA Masatoshi**
  **Tokyo 100-6606 (JP)**
- **KOBAYASHI Shinsuke**
  **Tokyo 100-6606 (JP)**
- **OIKAWA Takuya**
  **Tokyo 100-6606 (JP)**

(74) Representative: **Hoffmann Eitle**
**Patent- und Rechtsanwälte PartmbB**
**Arabellastraße 30**
**81925 München (DE)**

(54) **LEAD STORAGE BATTERY**

(57)    Provided is a lead storage battery including a negative electrode 9, a positive electrode 10, and an electrolytic solution. The negative electrode 9 includes a negative electrode current collector 12 and a negative electrode active material 13 retained in the negative electrode current collector 12, the negative electrode active material 13 includes a carbon material (A) having a specific surface area of 1.0 $m^2$/g or less, and the electrolytic solution includes lithium ions.

EP 3 723 183 A1

## Description

### Technical Field

The present invention relates to a lead storage battery.

### Background Art

Recently, in automobiles, various countermeasures for fuel efficiency improvement have been examined to prevent air pollution or global warming. As automobiles for which the countermeasures for fuel efficiency improvement have been taken, for example, micro hybrid vehicles such as start-stop-system vehicles (hereinafter, referred to as "ISS vehicles") which shorten engine operation time, and power generation control vehicles which reduce alternator power generation by the power of an engine have been examined.

In the ISS vehicles, the number of times of engine starting increases, and thus large current discharge of a lead storage battery is repeated. In a case where relatively deep charge and discharge are repeated, a high rate discharge performance of the lead storage battery is insufficient, and a battery voltage decreases, for example, when an engine is restarted after idling stop, and thus restarting may be difficult. Particularly, recently, it is important to improve the high rate discharge performance at a low temperature (low-temperature starting performance) so as to cope with a low-temperature region for use below freezing (for example, refer to Patent Literature 1), and cold cranking ampere (CCA) discharge capacity has been regarded as an important indicator of the low-temperature starting performance.

### Citation List

### Patent Literature

Patent Literature 1: Japanese Unexamined Patent Publication No. H9-147871

### Summary of Invention

### Technical Problem

There is room for further improvement in the low-temperature starting performance of the lead storage battery, and even in a lead storage battery having an excellent initial CCA discharge capacity, sufficient CCA discharge capacity may not be obtained after repeating charge and discharge.

Here, an object of the invention is to provide a lead storage battery that is excellent in initial CCA discharge capacity, and is also excellent in a CCA discharge capacity maintaining performance.

### Solution to Problem

As a result of intensive studies, the present inventors found that in a case where an electrolytic solution includes lithium ions (Li$^+$), when a carbon material having a certain specific surface area is contained in a negative electrode active material, initial CCA discharge capacity can be improved, and sufficiently high CCA discharge capacity can be obtained even after repeatedly performing charge and discharge, and they accomplished the invention.

That is, according to an aspect of the invention, there is provided a lead storage battery including: a negative electrode; a positive electrode; and an electrolytic solution. The negative electrode includes a negative electrode current collector and a negative electrode active material retained in the negative electrode current collector, the negative electrode active material includes a carbon material (A) having a specific surface area of 1.0 m$^2$/g or less, and the electrolytic solution includes lithium ions. The lead storage battery having the above-described configuration is excellent in initial CCA discharge capacity, and is also excellent in a CCA discharge capacity maintaining performance.

In addition, in Europe, chargeability of the lead storage battery in a charge and discharge cycle in accordance with control of a micro hybrid vehicle is emphasized. Accordingly, dynamic charge acceptance (DCA) evaluation is standardized as an evaluation standard for a charge performance of the lead storage battery during charge and discharge cycles, and thus there is a tendency that the lead storage battery has an excellent DCA performance even in the case of being used in a partially charged state called PSOC.

The amount of the carbon material (A) contained in the negative electrode active material may be 0.2% by mass or greater on the basis of the total mass of the negative electrode active material. In this case, there is a tendency that the CCA discharge capacity maintaining performance is further improved.

The negative electrode active material may further include a carbon material (B) having a specific surface area of 500 to 800 m$^2$/g. According to this, the CCA discharge capacity maintaining performance can be further improved.

The amount of the carbon material (B) contained in the negative electrode active material may be 10% by mass or less on the basis of the total mass of the carbon material. In this case, there is a tendency that the CCA discharge capacity maintaining performance is further improved.

A concentration of the lithium ions in the electrolytic solution may be 0.009 mol/L or greater. In this case, there is a tendency that the initial CCA discharge capacity is further improved.

The lead storage battery may further include a separator having a thickness of greater than 0.65 mm and less than 0.75 mm. According to this, the CCA discharge capacity maintaining performance can be further improved.

The separator may include a base portion and a rib formed in a convex shape on the base portion, and a height of the rib may be 0.4 to 0.6 mm. In a case where the separator has the shape, there is a tendency that the CCA discharge capacity maintaining performance is further improved.

The separator may be formed from polyolefin or polyethylene terephthalate. In this case, there is a tendency that vibration resistance is improved, and the CCA maintaining performance is further improved.

**Advantageous Effects of Invention**

According to the invention, it is possible to provide a lead storage battery that is excellent in initial CCA discharge capacity, and is also excellent in a CCA discharge capacity maintaining performance.

**Brief Description of Drawings**

FIG. 1 is a perspective view illustrating an overall configuration and an internal structure of a lead storage battery according to an embodiment.

FIG. 2 is a perspective view illustrating an electrode group that is provided in the lead storage battery illustrated in FIG. 1.

FIG. 3 is a view for describing a separator that is provided in the lead storage battery illustrated in FIG. 1.

**Description of Embodiments**

Hereinafter, an embodiment of the invention will be described in detail with reference to the drawings.

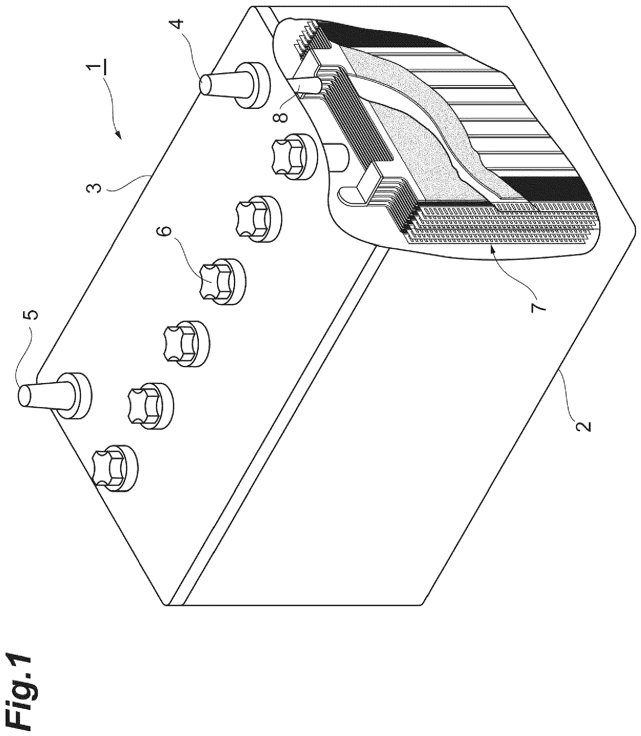

FIG. 1 is a perspective view illustrating an overall configuration and an internal structure of a lead storage battery according to an embodiment. As illustrated in FIG. 1, a lead storage battery 1 includes a battery case 2 of which an upper surface is opened, and a lid 3 that covers an opening of the battery case 2. The battery case 2 and the lid 3 are formed from, for example, polypropylene. A negative electrode terminal 4, a positive electrode terminal 5, and a liquid vent plug 6 that closes a liquid injection port provided in the lid 3 are provided in the lid 3.

Although not illustrated in FIG. 1, the inside of the battery case 2 is divided by five partition walls, and six cell chambers are formed inside the battery case 2. In the cell chambers of the battery case 2, an electrode group 7, a negative pole 8 that connects the electrode group 7 to the negative electrode terminal 4, a positive pole (not illustrated) that connects the electrode group 7 to the positive electrode terminal 5, and an electrolytic solution are accommodated.

The electrolytic solution contains dilute sulfuric acid and lithium ions. For example, the dilute sulfuric acid may be dilute sulfuric acid of which a specific gravity (20°C) after formation is 1.25 to 1.33.

A concentration of the lithium ions in the electrolytic solution may be 0.009 mol/L or greater, 0.010 mol/L or greater, 0.012 mol/L or greater, 0.014 mol/L or greater, 0.016 mol/L or greater, or 0.018 mol/L or greater from the viewpoint of further improving initial CCA discharge capacity and from the viewpoint of further improving the CCA maintaining performance. The concentration of the lithium ions in the electrolytic solution may be 0.18 mol/L or less, 0.054 mol/L or less, 0.036 mol/L or less, 0.035 mol/L or less, 0.030 mol/L or less, 0.025 mol/L or less, 0.020 mol/L or less, or 0.018 mol/L or less from the viewpoint of further improving an operational lifetime performance and from the viewpoint of further improving the CCA maintaining performance. The upper limits and the lower limits can be arbitrarily combined. That is, for example, the concentration of the lithium ions in the electrolytic solution may be 0.009 to 0.18 mol/L, 0.009 to 0.054 mol/L, 0.009 to 0.036 mol/L, 0.009 to 0.035 mol/L, 0.009 to 0.030 mol/L, 0.009 to 0.025 mol/L, 0.009 to 0.020 mol/L, 0.009 to 0.018 mol/L, 0.010 to 0.035 mol/L, 0.012 to 0.035 mol/L, 0.014 to 0.035 mol/L, 0.016 to 0.035 mol/L or 0.018 to 0.035 mol/L from the viewpoint of further improving the initial CCA discharge capacity and from the viewpoint of further improving the operational lifetime performance. Note that, in the following similar description, individually described upper limits and lower limits can be arbitrarily combined.

The electrolytic solution may further contain aluminum ions. For example, a concentration of the aluminum ions in the electrolytic solution may be 0.005 mol/L or greater, and may be 0.4 mol/L or less.

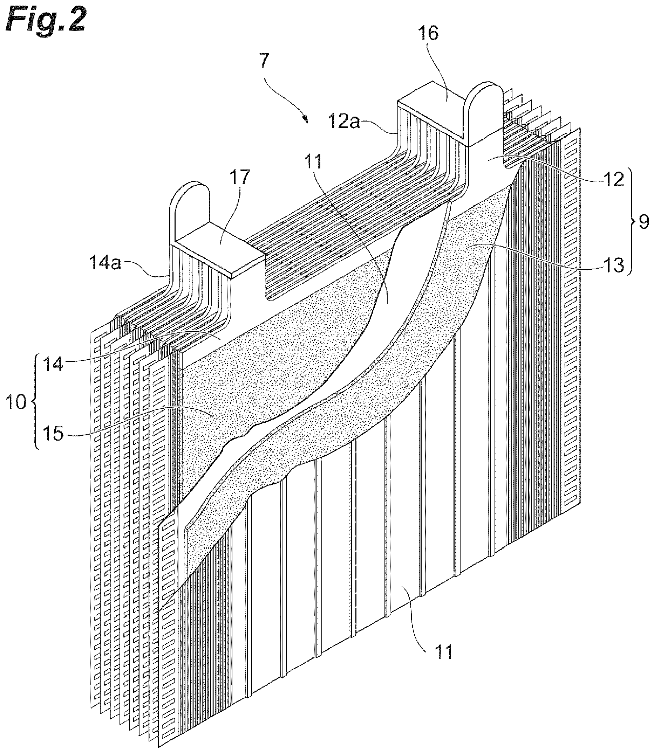

FIG. 2 is a perspective view illustrating the electrode group 7. As illustrated in FIG. 2, the electrode group 7 includes a negative electrode plate (plate-shaped negative electrode) 9, a positive electrode plate (plate-shaped positive electrode) 10, and a separator 11 disposed between the negative electrode plate 9 and the positive electrode plate 10. The negative electrode plate 9 includes a negative electrode current collector (negative electrode grid) 12, and a negative electrode active material 13 retained in the negative electrode current collector 12. The positive electrode plate 10 includes a positive electrode current collector (positive electrode grid) 14, and a positive electrode active material 15 retained in the positive electrode current collector 14. In this specification, a member excluding a negative electrode current collector from a negative electrode after formation is defined as a "negative electrode active material", and a member excluding a positive electrode current collector from a positive electrode after formation is defined as a "positive electrode active material".

The electrode group 7 has a structure in which a plurality of the negative electrode plates 9 and a plurality of the positive electrode plates 10 are alternately stacked in a direction approximately parallel to an opening surface of the battery case 2 with the separator 11 interposed therebetween. That is, the negative electrode plates 9 and the positive electrode plates 10 are alternately disposed with the separator 11 interposed therebetween so that main surfaces thereof extend in a direction perpendicular to the opening surface of the battery case 2. In the electrode group 7, ear portions 12a of a plurality of the negative electrode current collectors 12 in the plurality of negative electrode plates 9 are collectively welded by a negative electrode strap 16. Similarly, ear portions 14a of a plurality of the positive electrode current collectors 14 in the plurality of positive electrode plates 10 are collectively welded by a positive electrode strap 17. The negative electrode strap 16 and the positive electrode strap 17 are respectively connected to the negative electrode terminal 4 and the positive electrode terminal 5 through the negative pole 8 and the positive pole.

The negative electrode current collector 12 and the positive electrode current collector 14 are formed from a lead alloy. The lead alloy may be an alloy containing tin, calcium, antimony, selenium, silver, bismuth, and the like in addition to lead, and specifically, may be, for example, an alloy containing lead, tin, and calcium (Pb-Sn-Ca-based alloy).

The negative electrode active material 13 includes at least a Pb component and a carbon material. The Pb component includes at least Pb, and further includes a Pb component (for example, $PbSO_4$) other than Pb as necessary. Preferably, the Pb component includes porous spongy lead.

The amount of the Pb component contained in the negative electrode active material 13 may be 93% by mass or greater, 95% by mass or greater, or 97% by mass or greater, and may be 99% by mass or less on the basis of the total mass of the negative electrode active material from the viewpoint of being further excellent in battery capacity, discharge characteristics (low-temperature high rate discharge characteristics, and the like), cycle characteristics, and the like. For example, the amount of the Pb component contained in the negative electrode active material 13 may be 93% by mass to 99% by mass, 95% by mass to 99% by mass, or 97% by mass to 99% by mass on the basis of the total mass of the negative electrode active material.

Examples of the carbon material include carbon black, graphite, and the like. Examples of carbon black include furnace black, channel black, acetylene black, thermal black, and Ketjen black.

The carbon material includes at least a carbon material (A) having a specific surface area of 1.0 $m^2/g$ or less. In a case where the carbon material (A) is graphite, there is a tendency that an effect of the invention is significantly obtained.

The specific surface area of the carbon material (A) may be 0.9 $m^2/g$ or less, 0.8 $m^2/g$ or less, or 0.75 $m^2/g$ or less from the viewpoint of further improving the CCA discharge capacity maintaining performance. The specific surface area of the carbon material (A) may be 0.1 $m^2/g$ or greater, 0.3 $m^2/g$ or greater, or 0.5 $m^2/g$ or greater from the viewpoint of further improving the CCA discharge capacity maintaining performance. For example, the specific surface area of the carbon material (A) may be 0.1 to 1.0 $m^2/g$, 0.1 to 0.9 $m^2/g$, 0.1 to 0.8 $m^2/g$, 0.1 to 0.75 $m^2/g$, 0.3 to 1.0 $m^2/g$, or 0.5 to 1.0 $m^2/g$.

The specific surface area of the carbon material (A), for example, can be measured by a BET method. The BET method is a method in which an inert gas (for example, a nitrogen gas) of which one molecule size is known is adsorbed to a surface of a measurement sample, and a surface area is obtained from an adsorption amount and an area occupied by the inert gas. The BET method is a typical specific area measurement method. Specifically, for example, measurement can be performed under the following conditions.

[Specific Surface Area Measurement Conditions]

Apparatus: Macsorb Automatic Surface Area Analyzer (manufactured by Mountech Co., Ltd.)
Measurement method: BET method
Adsorption gas: Nitrogen
Flow rate: 25 mL/minute

The amount of the carbon material (A) contained in the negative electrode active material 13 may be 0.2% by mass or greater, 0.5% by mass or greater, 1.0% by mass or greater, or 1.5% by mass or greater on the basis of the total mass of the negative electrode active material from the viewpoint that the CCA discharge capacity maintaining performance is further improved. The amount of the carbon material (A) contained in the negative electrode active material 13 may be 3.5% by mass or less, 3.0% by mass or less, 2.5% by mass or less, or 2.0% by mass or less on the basis of the total mass of the negative electrode active material from the viewpoint of improving a DCA performance (charge acceptance performance). For example, the amount of the carbon material (A) contained may be 0.2% by mass to 3.5% by mass, 0.5% by mass to 3.0% by mass, 1.0% by mass to 2.5% by mass, or 1.5% by mass to 2.0% by mass on the basis of the total mass of the negative electrode active material.

The carbon material may be composed of only the carbon material (A), or may contain a carbon material other than the carbon material (A). The amount of the carbon material (A) contained in the carbon material may be 90% by mass or greater, 93% by mass or greater, or 96% by mass or greater on the basis of the total mass of the carbon material from the viewpoint of further improving the CCA discharge capacity maintaining performance. The amount of the carbon material (A) contained in the carbon material may be 99% by mass or less, 98% by mass or less, or 97% by mass or less on the basis of the total mass of the carbon material.

Examples of the carbon material other than the carbon material (A) include a carbon material (B) having a specific surface area of 500 to 800 $m^2/g$. In a case where the carbon material includes the carbon material (B) in addition to the carbon material (A), there is a tendency that the CCA discharge capacity maintaining performance is further improved. The effect tends to be significant in a case where the carbon material (B) is carbon black, and the effect tends to be further significant in a case where the carbon material (A) is graphite and the carbon material (B) is carbon black.

The specific surface area of the carbon material (B) may be 600 $m^2/g$ or greater or 700 $m^2/g$ or greater from the viewpoint of sufficiently exhibiting an effect of suppressing deterioration of the CCA performance. In addition, the specific surface area of the carbon material (B) may be 750 $m^2/g$ or less from the viewpoint of improving the DCA performance (charge acceptance performance). From the viewpoints, for example, the specific surface area of the carbon material (B) may be 500 to 800 $m^2/g$, 600 to 800 $m^2/g$, 600 to 750 $m^2/g$, 700 to 800 $m^2/g$, or 700 to 750 $m^2/g$. The specific surface area of the carbon material (B) can be measured in a similar manner as in the carbon material (A).

In a case where the negative electrode active material 13 includes the carbon material (A) and the carbon material (B), the amount of the carbon material (A) contained may be 90% by mass or greater, 93% by mass or greater, or 96% by mass or greater, and may be 99% by mass or less, 98% by mass or less, or 97% by mass or less on the basis of a total amount of the carbon material (A) and the carbon material (B) from the viewpoint of further improving the CCA discharge capacity maintaining performance.

The amount of the carbon material (B) contained in the carbon material may be 1% by mass or greater, 2% by mass or greater, or 3% by mass or greater, and may be 10% by mass or less, 7% by mass or less, or 4% by mass or less on the basis of the total mass of the carbon material from the viewpoint of easily obtaining an effect due to a combination with the carbon material (A).

The amount of all of the carbon materials contained in the negative electrode active material 13 may be 0.2% by mass or greater, 0.5% by mass or greater, 1.0% by mass or greater, or 1.5% by mass or greater on the basis of the total mass of the negative electrode active material from the viewpoint of further improving the CCA discharge capacity maintaining performance. The amount of the all carbon materials contained in the negative electrode active material 13 may be 3.5% by mass or less, 3.0% by mass or less, 2.5% by mass or less, or 2.0% by mass or less on the basis of the total mass of the negative electrode active material from the viewpoint of further improving the DCA performance.

The negative electrode active material 13 may further include an additive such as a resin having a sulfo group and/or a sulfonate group, barium sulfate, and a reinforcing short fiber (an acrylic fiber, a polyethylene fiber, a polypropylene fiber, a polyethylene terephthalate fiber, and the like). The resin having the sulfo group and/or the sulfonate group may be at least one selected from the group consisting of ligninsulfonic acid, a ligninsulfonic acid salt, and a condensate of phenols, aminoaryl sulfonic acid, and formaldehyde (for example, a condensate of bisphenol, aminobenzene sulfonic acid, and formaldehyde).

The positive electrode active material 15 includes at least $PbO_2$ as the Pb component, and may further include a Pb component (for example, $PbSO_4$) other than $PbO_2$ as necessary. The amount of the Pb component contained may be 90% by mass or greater or 95% by mass or greater, and may be 99% by mass or less or 98% by mass or less on the basis of the total mass of the positive electrode active material.

The positive electrode active material 15 may further include a carbon material, a reinforcing short fiber, and the like. Examples of the carbon material include carbon black and graphite. Examples of carbon black include furnace black, channel black, acetylene black, thermal black, and Ketjen black. Examples of the reinforcing short fiber include an acrylic fiber, a polyethylene fiber, a polypropylene fiber, a polyethylene terephthalate fiber, and the like.

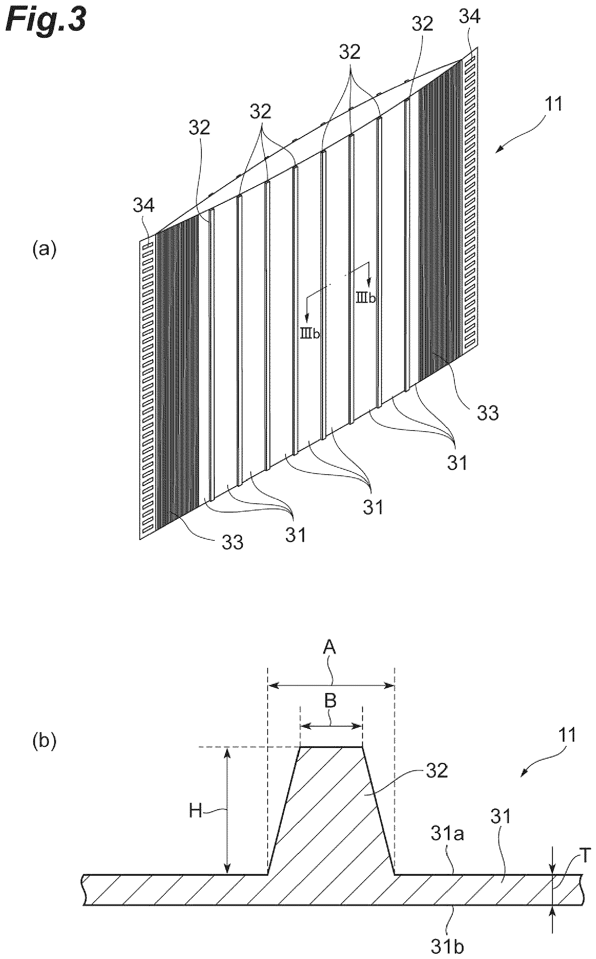

FIG. 3 is a view for describing the separator 11 provided in the lead storage battery 1 illustrated in FIG. 1. FIG. 3(a) is a perspective view illustrating the separator 11, and FIG. 3(b) is a cross-sectional view taken along line IIIb-IIIb in FIG. 3(a).

As illustrated in FIG. 3(a) and FIG 3(b), the separator 11 includes a base portion 31 having a flat plate (sheet) shape, and a rib portion including a plurality of ribs 32 and mini ribs 33 which are formed on an outer surface 31a of the base portion 31.

The separator 11 has a bag shape in which a long sheet including the base portion 31 and the rib portion is folded back so that the rib portion is on an outer side, and is closed along a long side by a mechanical sealing portion 34. In the lead storage battery illustrated in FIG. 1, the negative electrode plate 9 is accommodated in the bag-shaped separator 11, end portions of the ribs 32 in a height direction face or are in contact with the positive electrode plate 10, and an inner surface 31b of the base portion 31 faces or is in contact with the negative electrode plate 9.

The ribs 32 and the mini ribs 33 are formed in an elongated convex shape approximately parallel to each other so as to extend from an opening portion of the bag-shaped separator 11 to the bottom. The plurality of ribs 32 are provided in a central portion of the base portion 31 in a direction parallel to the opening portion of the separator 11, for example, with intervals of 3 to 15 mm. The plurality of mini ribs 33 are provided on both end sides of the base portion 31 with the ribs 32 interposed therebetween. An interval between the mini ribs 33 is narrower than the interval between the ribs 32.

A cross-sectional shape of the ribs 32 is, for example, a trapezoidal shape. A height H of the ribs 32 may be 0.4 mm or greater, 0.45 mm or greater, or 0.5 mm or greater, and may be 0.6 mm or less, 0.55 mm or less, or 0.5 mm or less. That is, the height H of the ribs 32 may be 0.4 to 0.6 mm, 0.4 to 0.5 mm, 0.45 to 0.55 mm, or 0.5 to 0.6 mm. When the height H of the ribs 32 is in the above-described ranges, there is a tendency that the CCA discharge capacity maintaining performance is further improved. As one of the reasons for obtaining the such an effect, it is considered that the ribs 32 can appropriately secure a space in which the separator 11 does not exist between electrodes (between the negative electrode and the positive electrode), and as a result, a stratification suppressing effect due to gassing is easily obtained.

In this embodiment, it is preferable that the height of at least a part of the ribs 32 is in the above-described ranges, and it is more preferable that the height of all of the ribs 32 is in the above-described ranges. In other words, it is preferable that the separator 11 include a plurality of (for example, 2 to 20) ribs having the height H of 0.4 to 0.6 mm. It is preferable that the height of all of the ribs is 0.6 mm or less. The separator may include a rib having the height H greater than 0.6 mm.

A width A of a lower base of the ribs 32 (a length in a direction (short direction) orthogonal to an extending direction at a portion in contact with the base portion 31) may be 0.2 mm or greater, 0.3 mm or greater, or 0.4 mm or greater, and may be 4 mm or less, 2 mm or less, or 1 mm or less. A width B of an upper base of the ribs 32 (a length in a direction (short direction) orthogonal to the extending direction at a convex upper surface) may be 0.1 mm or greater or 0.2 mm or greater, and may be 2 mm or less, 1 mm or less, or 0.8 mm or less.

A cross-sectional shape of the mini ribs 33 is, for example, a semi-circular shape. A height (a length in a protruding direction) and a width (a length in a direction (short direction) orthogonal to an extending direction at a portion in contact with the base portion 31) of the mini ribs 33 are smaller than the height H of the ribs 32 and the width A of the lower base. The height of the mini ribs 33 is, for example, equal to or less than the half of the height of the ribs 32, and is 0.3 mm or less, 0.2 mm or less, or 0.1 mm or less. The height of the mini ribs 33 is, for example, equal to or greater than 1/10 of the height of the ribs 32, and is 0.04 mm or greater, 0.05 mm or greater, or 0.06 mm or greater.

The thickness T of the base portion 31 may be 0.1 mm or greater, 0.15 mm or greater, or 0.2 mm or greater, and may be 0.3 mm or less, 0.25 mm or less, or 0.2 mm or less.

From the viewpoint of further improving the CCA maintaining performance, the thickness of the separator 11 is preferably greater than 0.65 mm, more preferably 0.66 mm or greater, still more preferably 0.67 mm or greater, particularly preferably 0.68 mm or greater, and extremely preferably 0.69 mm or greater. From the viewpoint of further improving the CCA maintaining performance, the thickness of the separator 11 is preferably less than 0.75 mm, more preferably 0.74 mm or less, still more preferably 0.73 mm or less, yet still more preferably 0.72 mm or less, particularly preferably 0.71 mm or less, and extremely preferably 0.70 mm or less. From the viewpoints, the thickness of the separator 11 is preferably greater than 0.65 mm and less than 0.75 mm, more preferably 0.66 to 0.74 mm, still more preferably 0.67 to 0.73 mm, yet still more preferably 0.68 to 0.72 mm, particularly preferably 0.69 to 0.71 mm, and extremely preferably 0.69 to 0.70 mm. The thickness of the separator represents the sum of the thickness T of the base portion 31, and the height H of the ribs 32. Specifically, the thickness of the separator is a thickness measured after the electrode group 7 is taken out from the lead storage battery 1 after formation and is washed with water for one hour, the electrode group 7 from which the electrolytic solution is removed is sufficiently dried in a system without oxygen, and then only the separator is detached from the electrode plate.

It is preferable that the separator 11 has a uniform thickness over the entire surface. In a case where a variation exists in the thickness of the separator 11, it is preferable that an average value of the thickness of the separator (the thickness including both the base portion and the ribs) is greater than 0.65 mm and less than 0.75 mm.

The separator 11 (each of the base portion 31 and the rib portion) is, for example, formed from at least one kind of material selected from the group consisting of glass, pulp, and a synthetic resin. The separator 11 may has flexibility. From the viewpoint of improving vibration resistance and the viewpoint of further improving the CCA maintaining performance, the separator 11 (each of the base portion and the rib portion) is formed from preferably polyolefin or polyethylene terephthalate, and more preferably polyolefin. The polyolefin may be polyethylene (PE), polypropylene (PP), or the like. The separator 11 may be woven fabric, non-woven fabric, a porous film, or the like which is formed from these material and to which inorganic particles such as $SiO_2$ and $Al_2O_3$ are attached.

In the above-described lead storage battery 1, since the electrolytic solution contains lithium ions, and the negative electrode active material 13 contains the carbon material (A), the initial CCA discharge capacity is excellent, and the CCA discharge capacity maintaining performance is also excellent.

The lead storage battery 1 is appropriately used as a lead storage battery for start-stop-system vehicle or a micro hybrid vehicle. That is, one embodiment of the invention is an application of the lead storage battery 1 to the start-stop-system vehicle or the micro hybrid vehicle.

The lead storage battery 1 is, for example, manufactured by a manufacturing method including an electrode manufacturing process of obtaining electrodes (a negative electrode and a positive electrode), an electrolytic solution preparing process, and an assembling process of obtaining the lead storage battery 1 by assembling a constituent member including the electrodes.

In the electrode manufacturing process, for example, negative electrode active material paste is retained on the negative electrode current collector 12, and is aged and dried to obtain an unformed negative electrode. Also, positive electrode active material paste is retained on the positive electrode current collector 14, and is aged and dried under the conditions to obtain an unformed positive electrode.

The negative electrode active material paste include, for example, a lead powder, a carbon material (the carbon material (A) and the like), the above-described other component added as necessary, a solvent (for example, water or an organic solvent), and sulfuric acid (for example, dilute sulfuric acid). The negative electrode active material paste is, for example, obtained by mixing the lead powder and the other component to obtain a mixture, and by adding the solvent and the sulfuric acid to the mixture and by kneading the resultant mixture.

The positive electrode active material paste include, for example, a lead powder, the above-described other component added as necessary, a solvent (for example, water or an organic solvent), and sulfuric acid (for example, dilute sulfuric acid). The positive electrode active material paste may further include red lead ($Pb_3O_4$) from the viewpoint of shortening formation time.

Examples of the lead powder include a lead powder manufactured by a ball mill type lead powder manufacturing device or a Barton port type lead powder manufacturing device (in the ball mill type lead powder manufacturing device, a mixture of a powder of a main component PbO and scale-like metal lead).

The aging may be performed in an atmosphere of a temperature of 35 to 85°C and humidity of 50 to 98 RH% for 15 to 60 hours. The drying may be performed at a temperature of 45 to 80°C for 15 to 30 hours.

The electrolytic solution preparing process includes, for example, a process of mixing and stirring a lithium ion source and an electrolyte aqueous solution such as dilute sulfuric acid. According to this, the lithium ion source is dissolved in the electrolyte aqueous solution, thereby obtaining an electrolytic solution containing lithium ions. In the process, an aluminum ion source may be optionally further mixed. In this case, an electrolytic solution containing lithium ions and aluminum ions can be obtained.

Examples of the lithium ion source include sulfate, sulfite, carbonate, hydrogen carbonate, phosphate, borate, and a metal acid salt of lithium. Among these, the lithium sulfate is preferably used. In the case of using the lithium sulfate, in addition to sulfate ions derived from the dilute sulfuric acid, sulfate ions supplied by dissolution of lithium sulfate can be used, and thus the charge acceptance performance after being left over-discharge is likely to be improved.

Examples of the aluminum ion source include sulfate, sulfite, carbonate, hydrogen carbonate, phosphate, borate, and a metal acid salt of aluminum.

The amount of the lithium ion source and the amount of the aluminum ion source which are mixed may be appropriately adjusted so that the concentration of the lithium ions and the concentration of the aluminum ions in the electrolytic solution are in the above-described ranges.

In the stirring, a device such as MAZWLA ZZ-2221 (product name, manufactured by TOKYO RIKAKIKAI CO., LTD.), HIVIS MIX Model 2P-1 (product name, manufactured by PRIMIX Corporation) can be used as a stirrer.

In the assembling process, for example, the unformed negative electrode and the unformed positive electrode which are obtained are stacked with the separator 11 interposed therebetween, and the ear portions 12a of electrodes having the same polarity and the ear portions 14a of electrodes having the same polarity are welded by the straps 16 and 17, respectively, to obtain electrode groups. The electrode groups are disposed in a battery case to prepare an unformed lead storage battery. Next, an electrolytic solution including at least lithium ions and dilute sulfuric acid is put into the unformed lead storage battery, and a direct current is applied to perform battery case formation. Next, the specific gravity (20°C) of sulfuric acid after the formation is adjusted to an appropriate specific gravity of the electrolytic solution, thereby obtaining the lead storage battery 1. The specific gravity (20°C) of the sulfuric acid used in the formation may be 1.15 to 1.25. A formation condition can be adjusted in correspondence with the size of the electrodes. A formation treatment may be carried out in the assembling process, or may be carried out in the electrode manufacturing process (tank formation).

Note that, the method for manufacturing the lead storage battery 1 may not include the electrode manufacturing process and the electrolytic solution preparation process. That is, in the assembling process, electrodes manufactured in advance may be used, and an electrolytic solution prepared in advance may be used. In addition, the electrolytic solution that is injected into the battery case may be an electrolytic solution that does not include lithium ions. In a case where the electrolytic solution that is injected does not include lithium ions, lithium ions may be contained in the electrolytic solution after assembling the lead storage battery by a method in which the lithium ion source is added to an electrode active material to elute ions into the electrolytic solution, a method in which the ion source is provided at a site in contact with the electrolytic solution in the battery case to elute ions into the electrolytic solution, or the like.

Hereinbefore, description has been given of the lead storage battery 1 and the method for manufacturing the lead storage battery 1 according to this embodiment, but the invention is not limited to the embodiment.

For example, in the embodiment, all electrode plate groups accommodated in respective cell chambers include the separator 11, but in another embodiment, the electrode plate groups may not include the separator 11, and a part of the electrode plate groups may include the separator 11.

In addition, in the embodiment, the negative electrode plate 9 is accommodated in the bag-shaped separator 11, but in another embodiment, the positive electrode plate 10 may be accommodated in the bag-shaped separator 11. In addition, the separator 11 may not be the bag shape, and may be a plate shape as an example.

**Examples**

Hereinafter, the invention will be described in detail with reference to examples, but the invention is not limited to only the following examples.

(Preparation of Electrolytic Solution)

A lithium sulfate aqueous solution was added to dilute sulfuric acid so that the concentration of lithium ions in the electrolytic solution becomes 0.018 mol/L, thereby preparing an electrolytic solution. The specific gravity of the electrolytic solution was 1.28.

(Preparation of Separator)

Bag-shaped Separators 1 to 3 were prepared by processing a sheet-shaped object, which is formed from microporous polyethylene and in which a plurality of linear rib portions are formed on one surface, into a bag shape such that the surface on which the rib portions (ribs and mini ribs) are formed is located on an outer side. Separators 1 to 3 have the same shape except that the height of the ribs (rib height) is different in each case. The thickness of a base portion (base thickness), the height of the ribs (rib height), and a total thickness in Separators 1 to 3 are shown in Table 1.

[Table 1]

|  | Separator | | |
|---|---|---|---|
|  | Total thickness [mm] | Rib height [mm] | Base thickness [mm] |
| Separator 1 | 0.8 | 0.6 | 0.2 |
| Separator 2 | 0.7 | 0.5 | 0.2 |
| Separator 3 | 0.6 | 0.4 | 0.2 |

<Example 1>

(Preparation of Battery Case)

A battery case which is constituted by a box body of which an upper surface is opened and in which the inside is divided into six cell chambers by partition walls was prepared.

(Preparation of Positive Electrode Plate)

0.25% by mass (on the basis of the total mass of a lead powder) of acrylic fiber as a reinforcing short fiber was added to the lead powder, and the resultant mixture was dry-mixed. Next, 3% by mass of water and 30% by mass of dilute sulfuric acid (specific gravity: 1.55) were added to the obtained mixture including the lead powder, and the resultant mixture was kneaded for one hour to prepare positive electrode active material paste. In manufacturing of the positive electrode active material paste, addition of dilute sulfuric acid (specific gravity: 1.55) was performed step by step so as to avoid rapid temperature rise. Note that, a blending amount of water and dilute sulfuric acid represents a blending amount on the basis of the total mass of the lead powder and the reinforcing short fiber.

An expanded current collector prepared by subjecting a rolled sheet of a lead alloy to expanding processing was filled with the positive electrode active material paste, and the resultant current collector was aged in an atmosphere of a temperature of 50°C and humidity of 98% for 24 hours. Then, the resultant current collector was dried at a temperature of 50°C for 16 hours to prepare a positive electrode plate including the unformed positive electrode active material.

(Preparation of Negative Electrode Plate)

As a raw material of the negative electrode active material, a lead powder was used. A mixture of sodium lignin sulfonate (manufactured by Nippon Paper Industries Co., Ltd., product name: Vanillex N), a carbon material (graphite having a specific surface area of 0.7 m$^2$/g, the carbon material (A)), a polyethylene terephthalate fiber (cut-out fiber, a fiber length: 3 mm), and barium sulfate was added to the lead powder, and the resultant mixture was dry-mixed. Next, water was added to the mixture, and the mixture was kneaded. Next, negative electrode active material paste was prepared by kneading the mixture while adding dilute sulfuric acid having a specific gravity of 1.280 to the mixture little by little. An expanded current collector prepared by subjecting a rolled sheet of a lead alloy to expanding processing was filled with the negative electrode active material paste, and the resultant current collector was aged in an atmosphere of a temperature of 50°C and humidity of 98% for 24 hours. Then, the resultant current collector was dried to prepare a negative electrode plate including the unformed negative electrode active material. Note that, the sodium lignin sulfonate, the carbon material (A), the polyethylene terephthalate fiber, and the barium sulfate were blended so that the amounts thereof based on the total mass of the negative electrode active material after formation become 0.2% by mass, 1.5% by mass, 0.1% by mass, and 1.5% by mass, respectively.

(Assembly of Battery)

The unformed negative electrode plate was inserted into Separator 1. Next, seven unformed positive electrode plates and eight unformed negative electrode plates each being inserted into Separator 1 were alternately stacked. Next, ear portions of electrode plates having the same polarity were welded by a cast-on-strap (COS) method to prepare electrode plate groups (electrode groups). Six pieces of the electrode plate groups were prepared, and were inserted into the battery case, thereby assembling an EN-standard 12 V cell battery (rank performance: 600 CCA, size: LN2). Then, the electrolytic solution prepared as described above was injected to the battery, and formation was performed at a constant current of 10.4 A for 20 hours. The specific gravity of the electrolytic solution after the formation was adjusted to 1.28.

<Example 2>

A lead storage battery was manufactured in a similar manner as in Example 1 except that carbon black (carbon material (B)) having a specific surface area of 700 m$^2$/g was added as the carbon material in addition to graphite (carbon material (A)) having a specific surface area of 0.7 m$^2$/g in the preparation of the negative electrode plate. The carbon material (B) was blended so that the amount thereof based on the total mass of the negative electrode active material after formation becomes 0.05% by mass.

<Example 3>

A lead storage battery was manufactured in a similar manner as in Example 1 except that Separator 2 was used instead of Separator 1.

<Example 4>

A lead storage battery was manufactured in a similar manner as in Example 2 except that Separator 2 was used instead of Separator 1.

<Example 5>

A lead storage battery was manufactured in a similar manner as in Example 1 except that Separator 3 was used instead of Separator 1.

<Comparative Example 1>

A lead storage battery was manufactured in a similar manner as in Example 1 except that the carbon material was not used in the preparation of the negative electrode plate.

<Comparative Example 2>

A lead storage battery was manufactured in a similar manner as in Example 1 except that dilute sulfuric acid having a specific gravity of 1.28 was used as the electrolytic solution.

<Comparative Example 3>

A lead storage battery was manufactured in a similar manner as in Comparative Example 1 except that dilute sulfuric acid having a specific gravity of 1.28 was used as the electrolytic solution.

<CCA Evaluation>

Evaluation was performed in the following order on initial CCA discharge capacity (initial CCA) and CCA discharge capacity after a charge and discharge cycle (post-cycle CCA) of the lead storage batteries which were manufactured.

(Initial CCA Measurement Test)

First, after each of the lead storage batteries which were obtained was placed in a constant temperature bath cooled to -18°C atmosphere for 24 hours, discharge was performed at a CCA discharge current value of 600 A in the constant temperature bath cooled to the -18°C atmosphere, and time (CCA duration time) taken until a terminal voltage of the battery reached 10.5 V was recorded. The CCA discharge capacity (unit: Ah) was calculated by multiplying the obtained duration time (unit: time) by a discharge current value (unit: A). The obtained CCA discharge capacity was set as the initial CCA.

(Post-Cycle CCA Measurement Test)

With respect to the lead storage battery after the initial CCA measurement test, constant-voltage charge at 16.0 V was performed for 24 hours, and the following cycle test was performed.
First, discharge was performed at a current value of 12 A for 2.5 hours (Operation (1)). Next, an operation in which "constant voltage charge at 14.4 V was performed for 40 minutes and discharge was performed at a discharge current of 21 A for 30 minutes" as one cycle was performed a total of 85 cycles (Operation (2)). Next, constant voltage charge at 16.0 V was performed for 18 hours (Operation (3)). The series of Operations (1) to (3) were repeated a total of ten times (a total of 850 cycles).
With respect to the lead storage batteries after the cycle test, after performing constant voltage charge at 16.0 V for 24 hours, each of the lead storage batteries after charge was placed in a constant temperature bath cooled to -18°C atmosphere for 24 hours. Then, the CCA discharge capacity was calculated in a similar manner as described above. The obtained CCA discharge capacity was set as post-cycle CCA.
The initial CCA and the post-cycle CCA were evaluated relatively with initial CCA in Comparative Example 3 set to 100. Results are shown in Table 2.
In addition, a CCA maintaining rate of the lead storage batteries was obtained on the basis of the evaluation result. Results are shown in Table 2. Note that, a calculation formula of the CCA maintaining rate is expressed by the following Expression (I).

$$\text{CCA maintaining rate (\%)} = [\text{CCA discharge capacity after charge and discharge cycles (post-cycle CCA)}] \div [\text{initial CCA discharge capacity (initial CCA)}] \times 100 \ (I)$$

[Table 2]

| | Electrolytic solution | Negative electrode active material | | Separator | | | Evaluation | | |
|---|---|---|---|---|---|---|---|---|---|
| | Concentration of lithium ions [mol/L] | Carbon material (A) [% by mass] | Carbon material (B) [% by mass] | Total thickness [mm] | Rib height [mm] | Base thickness [mm] | Initial CCA | Post -cycle CCA | CCA maintaining rate [%] |
| Example 1 | 0.018 | 1.5 | - | 0.8 | 0.6 | 0.2 | 120 | 100 | 83.3 |
| Example 2 | 0.018 | 1.5 | 0.05 | 0.8 | 0.6 | 0.2 | 120 | 110 | 91.7 |
| Example 3 | 0.018 | 1.5 | - | 0.7 | 0.5 | 0.2 | 120 | 105 | 87.5 |
| Example 4 | 0.018 | 1.5 | 0.05 | 0.7 | 0.5 | 0.2 | 120 | 115 | 95.8 |
| Example 5 | 0.018 | 1.5 | - | 0.6 | 0.4 | 0.2 | 110 | 90 | 81.8 |
| Comparative Example 1 | 0.018 | - | - | 0.8 | 0.6 | 0.2 | 120 | 60 | 50.0 |
| Comparative Example 2 | - | 1.5 | - | 0.8 | 0.6 | 0.2 | 100 | 80 | 80.0 |
| Comparative Example 3 | - | - | - | 0.8 | 0.6 | 0.2 | 100 | 40 | 40.0 |

**Reference Signs List**

1: lead storage battery, 9: negative electrode plate (negative electrode), 10: positive electrode plate (positive electrode), 11: separator, 12: negative electrode current collector, 13: negative electrode active material, 31: base portion, 32: rib.

**Claims**

1. A lead storage battery comprising:

   a negative electrode;
   a positive electrode; and
   an electrolytic solution,
   wherein the negative electrode includes a negative electrode current collector and a negative electrode active material retained in the negative electrode current collector,
   the negative electrode active material includes a carbon material (A) having a specific surface area of 1.0 $m^2$/g or less, and
   the electrolytic solution includes lithium ions.

2. The lead storage battery according to claim 1,
   wherein the amount of the carbon material (A) contained in the negative electrode active material is 0.2% by mass or greater on the basis of the total mass of the negative electrode active material.

3. The lead storage battery according to claim 1 or 2,
   wherein the negative electrode active material further includes a carbon material (B) having a specific surface area of 500 to 800 $m^2$/g.

4. The lead storage battery according to claim 3,
   wherein the amount of the carbon material (B) contained in the negative electrode active material is 10% by mass or less on the basis of the total mass of the carbon material.

5. The lead storage battery according to any one of claims 1 to 4,
   wherein a concentration of the lithium ions in the electrolytic solution is 0.009 mol/L or greater.

6. The lead storage battery according to any one of claims 1 to 5, further comprising: a separator having a thickness of greater than 0.65 mm and less than 0.75 mm.

7. The lead storage battery according to claim 6,
   wherein the separator includes a base portion and a rib formed in a convex shape on the base portion, and
   a height of the rib is 0.4 to 0.6 mm.

8. The lead storage battery according to claim 6 or 7,
   wherein the separator is formed from polyolefin or polyethylene terephthalate.

Fig.1

# Fig.2

*Fig.3*

(a)

(b)

## INTERNATIONAL SEARCH REPORT

| | International application No. |
|---|---|
| | PCT/JP2019/020158 |

**A. CLASSIFICATION OF SUBJECT MATTER**
Int.Cl. H01M10/12(2006.01)i, H01M4/14(2006.01)i

According to International Patent Classification (IPC) or to both national classification and IPC

**B. FIELDS SEARCHED**

Minimum documentation searched (classification system followed by classification symbols)
Int.Cl. H01M10/12, H01M4/14

| Documentation searched other than minimum documentation to the extent that such documents are included in the fields searched | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-89310 A (GS YUASA INTERNATIONAL LTD.) 10 May 2012, claims, paragraph [0019] (Family: none) | 1-5 |
| Y | | 6-8 |
| Y | JP 2012-79432 A (GS YUASA INTERNATIONAL LTD.) 19 April 2012, paragraphs [0013]-[0014] (Family: none) | 6-8 |
| Y | WO 2016/121510 A1 (HITACHI CHEMICAL CO., LTD.) 04 August 2016, paragraphs [0094]-[0107] & EP 3252863 A1 paragraphs [0094]-[0107] & JP 2018-125294 A & CN 107210495 A | 6-8 |
| A | WO 2016/114316 A1 (HITACHI CHEMICAL CO., LTD.) 21 July 2016 (Family: none) | 1-8 |
| A | JP 2013-80594 A (GS YUASA INTERNATIONAL LTD.) 02 May 2013 (Family: none) | 1-8 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 August 2019 (08.08.2019) | 20 August 2019 (20.08.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9147871 B